# EUROPÄISCHE PATENTSCHRIFT

(11) **EP 0 464 699 B1**
(45) Veröffentlichungstag und Bekanntmachung des Hinweises auf die Patenterteilung: **15.02.1995**
(21) Anmeldenummer: 91110714.2
(22) Anmeldetag: 28.06.1991
(51) Int. Cl.: B65G 69/28, B65G 67/02

(54) **Gebäude mit einer Überfahrbrücke**
Building equipped with a loading bridge
Bâtiment équipé d'une passerelle de chargement

(30) Priorität: 03.07.1990 DE 4021180
(43) Veröffentlichungstag der Anmeldung: 08.01.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 003 033
- DE-A- 3 937 373
- US-A- 4 010 571

## Beschreibung

Die Erfindung geht aus von einem Gebäude nach dem Oberbegriff des Anspruchs 1.

Bei den bekannten Gebäuden dieser Ausbildung ist der Grund der Ausnehmung eine isolierende Wandung, wobei sich unterhalb dieser Wandung ein taschenförmiger Hohlraum befindet, in den Verlademittel des zu be- bzw. entladenden Fahrzeugs eingeführt werden können ( DE - A- 3o o3 o33 ). Bei diesen Gebäuden ist die Wandung stationär eingebaut; sie hat zwar einen günstigen wärmeisolierenden Effekt, beschränkt aber den Schwenkweg der Brückenplatte.

Es sind ferner Gebäude bekannt ( US - A- 4 o1o 571 ), bei denen der Gebäudeverschluss so ausgeführt ist, dass er im geschlossenen Zustand die Ausnehmung vorne ganz überdecken bzw. verschliessen kann. Bei diesen Gebäuden ist keine isolierende Wandung unterhalb der Überfahrbrücke vorgesehen; demgemäss können nicht unerhebliche Wärmeverluste nach unten hin auftreten.

Aufgrund der Erfindung soll ein grosser Freiraum unterhalb der Überfahrbrücke während des Betriebs z.B. zum Absenken und Verschwenken der Brückeplatte oder zur Anbringung besonderer Einrichtungen der Überfahrbrücke gegeben sein, zudem soll sichergestellt werden, dass bei Nichtgebrauch der Überfahrbrücke Wärmeverluste auch dann vermieden werden, wenn die Gefahr grösserer Temperaturdifferenzen zwischen dem unterhalb der Ausnehmung befindlichen Raum und dem Raum im Bereich der Brückenkonstruktion bzw. dem Raum darüber gegeben sind und dabei der Wunsch besteht, Wärmeverluste zu vermeiden.

Zur Lösung dieser Aufgabe wird erfindungsgemäss zumindest der vordere, der Gebäudeaussenwand zugekehrte Teil der Wandung von dem unteren, etwa in die waagerechte Ebene umlenkbaren Abschnitt des Gebäudeverschlusses gebildet.

Bevorzugte Ausführungsformen der Erfindung sind in den abhängigen Ansprüchen angegeben.

Der heb- und senkbare Gebäudeverschluss - selbst wärmeisolierend wirkend - erfüllt somit die Aufgabe der erwähnten isolierenden Wandung; dementsprechend ist der Verschluss länger ausgeführt, damit sein unteres Ende unterhalb der Überfahrbrücke beim Absenken des Verschlusses in die Waggerechte umgelenkt und dann die erwähnte Wandung bzw. zumindest Teile davon bilden kann.

Es versteht sich, dass das heb- und senkbare Verschlusselement des Gebäudeverschlusses über entsprechende Länge verfügen muss, damit es einmal an der Front des Gebäudes zum anderen unterhalb der Überfahrbrücke abdichten und isolieren kann.

Weitere Einzelheiten der Erfindung werden anhand der Zeichnung erläutert, in der ein Ausführungsbeispiel der Erfindung dargestellt ist. Es zeigen :
- Fig. 1: einen senkrechten Teilschnitt durch ein Lagerhaus im Bereich einer Öffnung des Gebäudes und
- Fig. 2: einen Schnitt nach der Linie II - II von Fig. 1.

In der Aussenwand 1 des Gebäudes befindet sich eine torartige Öffnung 2. Davor ist die Fahrbahn 3 für Fahrzeuge, die be- bzw. entladen werden sollen. Von diesem Fahrzeug ist die Ladepritsche 4 mit der Plattform 5 angedeutet.

Innerhalb des Gebäudes befindet sich eine Bodenfläche 6, auf der die innerhalb des Gebäudes befindlichen Flurfördergeräte verkehren, mit denen zum Be- bzw. Entladen die Plattform 5 befahren werden kann.

Vor der Öffnung 2 hat die Bodenfläche eine rechteckige Ausnehmung 7 zur Aufnahme einer Überfahrbrücke. Ihre Brückenplatte 8 ist am hinteren Ende um eine Querachse 9 an der die Fahrbahn bildenden Bodenplatte 1o des Gebäudes verschwenkbar gelagert, um die Bückenplatte 8 im Sinne des Doppelpfeiles 11 nach oben oder nach unten verschwenken zu können. Die Verschwenkung erfolgt mit Hilfe eines Arbeitszylinders 12, dessen Kolbenstange die Brückenplatte 8 vorne unterfängt. Der Arbeitszylinder 12 stützt sich unten auf einem Querträger 13 ab, der an den die Ausnehmung 7 seitlich begrenzenden Wandungen gelagert ist.

Am vorderen, freien Ende ist die Brückenplatte 8 mit einer ein- und ausfahrbaren Verlängerung 14 versehen, über die sich die Brückenplatte 8 auf der Plattform 5 abstützen kann.

Die Verlängerung 14 hat dabei die Aufgabe, den Spalt zwischen der Brückenplatte 8 und der Plattform 5 zu überbrücken.

Die Öffnung 2 ist durch ein heb- und senkbares Sektionaltor verschliessbar, dessen Sektionen 15 aus einem guten Wärmeisolator bestehen und das gemäss Zeichnung im geschlossenen Zustand wiedergegeben ist. Diese Sektionen 15 sind in üblicher Weise durch seitlich angebrachte Führungsschienen mittels Rollen geführt. Das Sektionaltor kann auch durch ein Rolltor ersetzt werden oder durch andere Torarten, die eine Umlenkung der Verschlusselemente zulassen und auch wärmeisolierend gestaltet sein müssen.

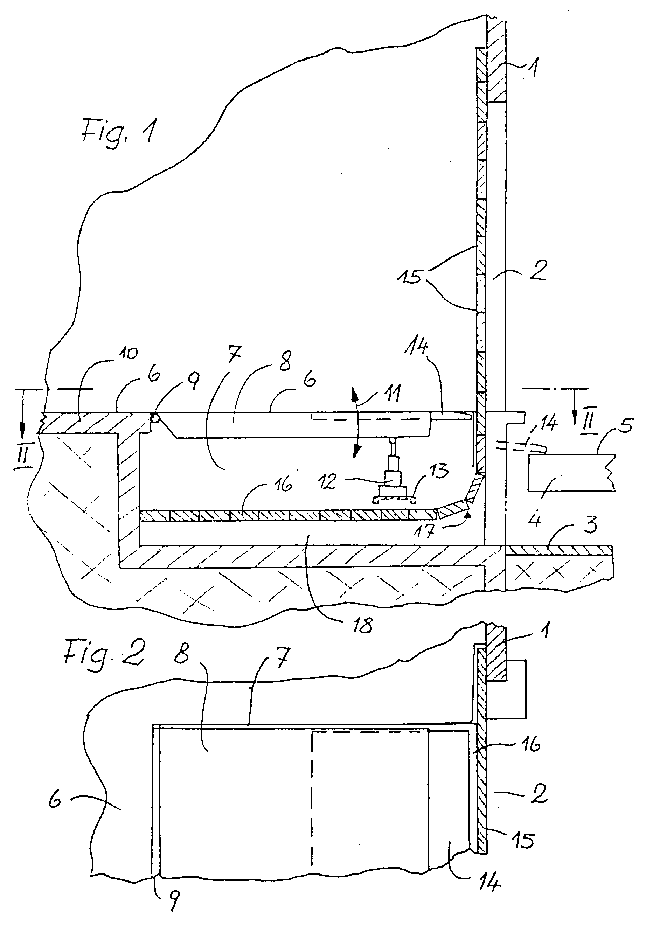

Das Sektionaltor ist so bemessen, dass es nicht nur einen üblichen senkrechten oberen Abschnitt, sondern zusätzlich noch einen unteren, etwa waagerecht verlaufenden Abschnitt 16 aufweist, der unterhalb des Querträgers 13 angeordnet ist und den Raum unterhalb der Brückenplatte 8 in die Ausnehmung 7 und einen darunter befindlichen Teil 18 unterteilt, und zwar nicht nur rein räumlich, sondern vor allen Dingen wärmetechnisch isolierend, um so die beiden Räume 7, 18 gegeneinander wärmetechnisch zu isolieren, wenn das Sektionaltor geschlossen ist ( Fig. 1 und 2 ).

Der obere senkrechte Abschnitt des Sektionaltores geht über eine Umlenkstelle 17 in den Abschnitt 16 über in der Weise, dass beim Öffnen des Tores die Sektionen 15 aus ihrer waagerechten Lage herausgezogen und schliesslich senkrecht angehoben werden. Beim Schliessen des Tores hingegen werden die unten befindlichen Sektionen 15 von der senkrechten Ausgangsstellung aus über die Umlenkstelle 17 in die waagerechte Lage überführt, um so den Abschnitt 16 entstehen zu lassen.

Der Raum 18 kann eine Tasche bilden für solche Fahrzeuge, die bei heruntergelassener Ladehilfe vor der geschlossenen Öffnung 2 parken müssen. Die Ladehilfe kann dann in die Tasche bzw. den Raum 18 eingeführt werden. Darüber hinaus ist aber auch die Unterteilung durch den Abschnitt 16 von Vorteil, wenn die Gefahr besteht, dass durch die Sohle des Raumes 18 der Raum 7 nachteilig beeinflusst werden könnte.

Es sei noch erwähnt, dass die Unterbringung der Sektionen 15 oberhalb der Öffnung 2 im geöffneten Zustand des Tores beliebig sein kann. Die Sektionen 15 können senkrecht nach oben, aber auch in eine Waagerechte zurück in das Gebäude geführt werden. Dies alles geschieht unter Verwendung bekannter Schienenführungen und Antriebe für die Sektionen 15.

Es liegt auch im Rahmen der Erfindung, den hinteren Teil des Abschnittes 16 als feste Isolationswand zu installieren und nur den vorderen, der Aussenwand 1 zugekehrten Teil unterhalb der Überfahrbrücke mit den Sektionen 15 entfernbar auszuführen.

## Patentansprüche

1. Gebäude, insb. Kühlhaus oder Gebäude mit erhöhter Innentemperatur, mit einer im Bereich der verschliessbaren Gebäudeöffnung (2) befindlichen Überfahrbrücke, deren am hinteren Ende um eine waagerechte Querachse (9) verschwenkbare Brückenplatte (8) sich über oder in einer Ausnehmung (7) zum Hineinschwenken der Brückenplatte befindet und die an ihrem freien Ende mit einer ausfahrbaren und wieder einfahrbaren ggfs. mit einer von einer etwa waagerechten Wirkstellung aus in eine etwa senkrechte Ruhelage klappbaren Verlängerung (14) zum Auflegen auf die Plattform (5) eines vor der Gebäudeöffnung befindlichen, zu be- bzw. entladenden Fahrzeuges versehen ist, wobei sich die Überfahrbrücke im Ruhezustand hinter dem heb- und senkbaren Gebäudeverschluss befindet, der in die Ausnehmung (7) absenkbar ist und diese im abgesenkten Zustand vorne verschliesst, und wobei ferner der Grund der Ausnehmung von einer isolierenden Wandung gebildet ist, die einen unterhalb der Ausnehmung befindlichen Hohlraum (18) nach oben hin begrenzt, dadurch gekennzeichnet, dass zumindest der vordere, der Gebäudeaussenwand (1) zugekehrte Teil der Wandung von dem unteren, etwa in die waagerechte Ebene umlenkbaren Abschnitt (16) des Gebäudeverschlusses gebildet ist.

2. Gebäude nach Anspruch 1, dadurch gekennzeichnet, dass der hintere Teil der Wandung aus einer feststehend angeordneten, isolierenden Wandung gebildet ist.

3. Gebäude nach Anspruch 1, dadurch gekennzeichnet, dass zwischen dem senkrechten Abschnitt und dem etwa waagerechten Abschnitt des Gebäudeverschlusses ein im Bogen geführter Abschnitt der den Gebäudeverschluss bildenden Elemente (15) vorgesehen ist.

## Claims

1. Building, more especially a cold store or building having a high internal temperature, including a bridging device, which is situated in the region of the closable building opening (2) and has a bridge plate (8), which is pivotable about a horizontal transverse axle (9) at the rear end, said bridge plate being situated above or in a recess (7) for the bridge plate to pivot therein and being provided on its free end with an extensible and retractable extension member (14), which is movable from a substantially horizontal operative position into a substantially vertical inoperative position, for being placed upon the platform (5) of a vehicle to be loaded or unloaded, which is situated in front of the building opening, wherein the bridging device is situated in its inoperative state behind the raisable and lowerable building closure member, which is lowerable into the recess (7) and closes such at the front in its lowered state, and also wherein the base of the recess is formed by an insulating wall which upwardly defines a cavity (18) situated beneath the recess, characterised in that at least the front part of the wall, facing the external building wall (1), is formed from the lower portion (16) of the building closure means, which portion is substantially deflectable into the horizontal plane.

2. Building according to claim 1, characterised in that the rear part of the wall is formed from a fixedly disposed, insulating wall.

3. Building according to claim 1, characterised in that an arcuate portion of the elements (15), forming the building closure member, is provided between the vertical portion and the substantially horizontal portion of the building closure member.

## Revendications

1. Bâtiment, notamment entrepôt frigorifique ou bâtiment à température intérieure plus élevée, comportant un niveleur de quai, se trouvant dans la région de la baie (2) du bâtiment, qui peut être fermée, et dont le tablier (8) de pont, qui peut basculer par rapport à un axe (9) transversal horizontal à l'extrémité arrière, se trouve au-dessus d'une fosse (7) ou dans une fosse (7) dans laquelle le tablier de pont peut basculer, et qui comporte, à son extrémité libre, un prolongement (14) qui peut être déployé et à nouveau rétracté, qui peut être éventuellement rabattu d'une position active à peu près horizontale à une position de repos à peu près verticale et qui est destiné à s'appliquer sur la plate-forme (5) d'un véhicule devant être chargé ou déchargé, se trouvant situé devant la baie du bâtiment, le niveleur de quai se trouvant à l'état de repos, en arrière du système de fermeture du bâtiment, qui peut être soulevé et abaissé et qui peut être abaissé dans la fosse (7) et qui, dans l'état abaissé, ferme ce dernier vers l'avant, le fond de la fosse étant en outre formé d'une paroi isolante, qui délimite vers le haut une cavité (18) se trouvant au-dessous de la fosse, caractérisé par le fait qu'au moins l'avant de la paroi, qui est tourné vers le mur extérieur du bâtiment, est formée par la partie inférieure (16), qui peut être déviée à peu près dans le plan horizontal, du système de fermeture du bâtiment.

2. Bâtiment suivant la revendication 1, caractérisé par le fait que l'arrière de la paroi est formée par une paroi isolante montée fixe.

3. Bâtiment suivant la revendication 1, caractérisé en ce qu'entre la partie verticale et la partie à peu prés horizontale du système de fermeture du bâtiment est prévu une partie, guidée suivant un arc de cercle, des éléments (15) constituant le système de fermeture du bâtiment.
